# EUROPÄISCHE PATENTSCHRIFT

(11) **EP 1 324 003 B1**
(45) Veröffentlichungstag und Bekanntmachung des Hinweises auf die Patenterteilung: **28.03.2007**
(21) Anmeldenummer: 02023078.5
(22) Anmeldetag: 17.10.2002
(51) Int. Cl.: G01B 7/30, G01D 5/36, G01D 5/347, B62D 15/02

(54) **Lenkwinkelsensor**
Steering angle sensor
Capteur d'angle de braquage

(30) Priorität: 28.12.2001 DE 10164388
(43) Veröffentlichungstag der Anmeldung: 02.07.2003
(73) Patentinhaber: Valeo Schalter und Sensoren GmbH, 74321 Bietigheim-Bissingen (DE)
(72) Erfinder: Ruff, Achim, 74354 Bietigheim (DE); Wigger, Bernd, 74366 Kirchheim (DE); Hadobas-Roessel, Katalin, 74321 Bietigheim-Bissingen (DE)
(74) Vertreter: Bulling, Alexander

(56) Entgegenhaltungen:
- EP-A- 0 922 627
- DE-A- 19 912 720
- DE-U1- 29 915 998
- US-A- 6 084 234

## Beschreibung

Die Erfindung betrifft einen Lenkwinkelsensor zur Bestimmung der Drehstellung eines Lenkrades eines Fahrzeuges, mit einer mit dem Lenkrad direkt oder indirekt verbundenen, eine optisch abtastbare Codierung tragenden Codescheibe, mit wenigstens einem optische Strahlen aussendenden Sendeelement und vorzugsweise mehreren die Strahlen empfangenden Empfängerelemente, und mit einem Lichtleiter zum Umlenken und gegebenenfalls Auffächern der von dem Sendeelement abgestrahlten Strahlen, wobei der Lichtleiter wenigstens einen Lichteinkopplungsabschnitt und vorzugsweise mehrere Lichtauskopplungsabschnitte aufweist.

Ein derartiger Lenkwinkelsensor ist aus der DE 199 60 789 A1 bekannt geworden. Bei derartigen bekannten Lenkwinkelsensoren hat sich als nachteilig herausgestellt, dass in den Lenkwinkelsensor eindringendes Licht von den Empfängerelementen empfangen wird und das Messergebnis des Lenkwinkelsensors nachteilig beeinflusst.

Aus der EP 0 922 627 A1 ist ein Lenkwinkelsensor bekannt geworden, der eine auf einem Träger angeordnete Lichtquelle und auf dem Träger angeordnete CCD-Zeile aufweist. Das von der Lichtquelle ausgesendete Licht wird dabei über einen Lichtleiter auf die CCD-Zeile umgelenkt. Zwischen dem Lichtleiter und der CCD-Zeile passiert das Licht eine Codescheibe.

Aus der DE 29915998 U1 ist ein Lenkwinkelsensor bekannt geworden, bei dem um die Lichtquelle ein Lichtschacht angeordnet ist.

Aus der US 6 084 234 A ist ein Positionswandler bekannt geworden, bei dem von Lichtquellen ausgesandtes Licht eine Codierungseinrichtung passiert und von Lichtdecodern empfangen wird. Das Licht wird dabei durch Öffnungen im Gehäuse des Positionswandlers geführt, wodurch der Einfluss von Streulicht verringert wird.

Der vorliegenden Erfindung liegt die Aufgabe zugrunde, einen bekannten Lenkwinkelsensor derart weiterzubilden, dass die Funktionsgenauigkeit des Sensors erhöht wird.

Diese Aufgabe wird bei einem Lenkwinkelsensor mit den Merkmalen des Anspruchs 1 gelöst. Das Vorsehen des erfindungsgemäßen Blendenelements hat den Vorteil, dass in den Lenkwinkelsensor eindringendes Licht das Messergebnis des Lenkwinkelsensors nicht verfälscht oder negativ beeinflusst. Erfindungsgemäß sind das Sendeelement, die Empfängerelemente und das Blendenelement auf der Sensorplatine angeordnet. Dies hat den Vorteil, dass ein zueinander positionsgenaues Anordnen der jeweiligen Elemente erreicht wird.

Das Blendenelement weist im Bereich des Sendeelements und/oder im Bereich der Empfängerelemente einen Durchbruch bzw. Durchbrüche, insbesondere in Form von Schlitzen oder Kreiszylindern, auf. Je nach Querschnitt des jeweiligen Strahlenbündels können auch anders ausgebildete Durchbrüche Verwendung finden. Dabei begrenzen die Durchbrüche die Querschnitte der jeweiligen Strahlenkanäle.

Vorteilhafterweise weist das Blendenelement eine in Richtung der Strahlenkanäle gerichtete entsprechende Dicke auf, die 2- bis 8-mal dicker ist als die Dicke der Codescheibe. Dabei ist das Blendenelement vorzugsweise aus einem lichtabsorbierendnen Material, so dass im Bereich der Durchbrüche Licht, und insbesondere Streulicht, nicht an den Oberflächen der Durchbrüche reflektiert wird und über eine derartige Reflektion zu den Empfängerelementen gelangt.

Erfindungsgemäß ist besonders vorteilhaft, wenn das Blendenelement den Strahlengang zwischen dem Sendeelement und dem Lichteinkopplungsabschnitt vollständig abschirmt. Hierdurch wird verhindert, dass Strahlen, welche nicht von dem Sendeelement ausgesendet werden, über den Lichteinkopplungsabschnitt in den Lichtleiter gelangen können.

Ferner ist erfindungsgemäß denkbar, dass das Blendenelement den Strahlengang bzw. die Strahlengänge zwischen der Codescheibe und den Empfängerelementen abschirmt, wobei die Codescheibe einen zwischen dem Blendenelement und den Lichtauskopplungsabschnitten vorhandenen Spalt weitgehend ausfüllt. Dadurch wird erreicht, dass kein Streulicht über den Bereich zwischen den Lichtauskopplungsabschnitten und den Empfängerelementen zu den Empfängerelementen gelangen kann.

Bei einer weiteren, bevorzugten Ausführungsform der Erfindung ist der Lichtleiter über Befestigungsabschnitte und/oder Positionierabschnitte direkt mit dem Sensorgehäuse gekoppelt. Dies hat den Vorteil, dass eine Positionierung des Lichtleiters gegenüber dem Sensorgehäuse direkt erreicht wird. Über die Befestigungsabschnitte, die beispielsweise als Befestigungslaschen ausgebildet sein können, kann der Lichtleiter an dem Gehäuse befestigt werden. Zur positionsgenauen Befestigung sind vorteilhafterweise Positionierabschnitte, beispielsweise Positionierpins, die in zugehörige Positionieraussparungen eingreifen, vorgesehen.

Vorzugsweise ist der Lichtleiter so angeordnet, dass er direkt auf der Sensorplatine aufliegt. Dies hat den Vorteil, dass eine positionsgenaue Anordnung des Lichtleiters bezüglich der Sensorplatine und den auf der Sensorplatine angeordneten Sende- bzw. Empfängerelementen gegeben ist.

Vorteilhafterweise weist der Lichtleiter wenigstens einen Positionierabschnitt auf, der die Sensorplatine durchgreift und in eine am Sensorgehäuse vorgesehene Positionieraussparung eingreift oder diese durchgreift. Über einen derartigen Positionierabschnitt, der beispielsweise als Positionierpin ausgebildet sein kann, wird zum einen erreicht, dass die Sensorplatine bezüglich des Lichtleiters positioniert ist und zum anderen, dass auch der Lichtleiter samt Sensorplatine gegenüber dem Sensorgehäuse positionsgenau angeordnet werden kann. Durch die direkte Verbindung des Lichtleiters mit zum einen der Sensorplatine und zum anderen dem Sensorgehäuse können Positionstoleranzen innerhalb des Sensors gering gehalten werden.

Eine bevorzugte Ausführungsform ergibt sich dann, wenn das Blendenelement wenigstens abschnittsweise zwischen dem Lichtleiter und der Sensorplatine angeordnet ist. Dadurch kann insbesondere gewährleistet werden, dass der Strahlengang zwischen dem Sendeelement und dem Lichteinkopplungsabschnitt des Lichtleiters durch das Blendenelement vollständig geschützt bzw. abgeschirmt werden kann. Über den Lichtleiter kann folglich auch das Blendenelement an der Sensorplatine angeordnet bzw. befestigt sein.

Dabei ist vorteilhafterweise das Blendenelement direkt mit der Sensorplatine gekoppelt. Hierdurch wird eine positionsgenaue Anordnung des Blendenelements auf der Sensorplatine gewährleistet.

Dazu weist vorteilhafterweise die Sensorplatine Positionieraussparungen bzw. Positionierabschnitte auf, die zur Aufnahme von an dem Blendenelement vorgesehenen Positionierabschnitten bzw. Positionieraussparungen vorgesehen sind. Derartige Positionierabschnitte bzw. Positionieraussparungen können beispielsweise als Positionierpins bzw. Positionierbohrungen ausgebildet sein.

Weitere vorteilhafte Ausgestaltungen und Einzelheiten der Erfindung sind der nachfolgenden Beschreibung zu entnehmen, in der die Erfindung anhand des in der Zeichnung dargestellten Ausführungsbeispiels näher beschrieben und erläutert ist.

Es zeigen:
- Fig. 1:: eine perspektivische Darstellung eines Abschnitts einer offenen, erfindungsgemäßen Sensoreinheit;
- Figur 2 und 3:: eine perspektivische Draufsicht und eine perspektivische Unteransicht eines Lichtleiters;
- Figur 4: einen Lichtleiter, ein Blendenelement und eine Sensorplatine in Einzelteildarstellung;
- Figur 5: das auf der Sensorplatine angeordnete Blendenelement; und
- Figur 6: einen Schnitt durch das auf der Sensorplatine angeordnete Blendenelement.

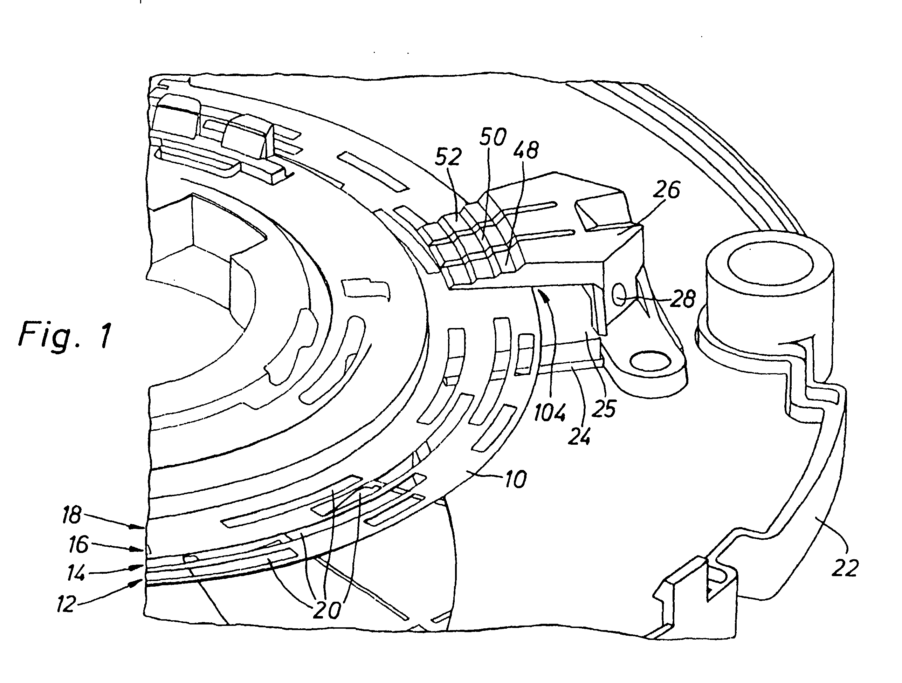

Die Fig. 1 zeigt ausschnittsweise und in perspektivischer Darstellung einen Abschnitt einer Codescheibe 10, welche insgesamt vier Codespuren 12, 14, 16 und 18 Durchbrüche 20 als Codierung aufweist. Die Codescheibe 10 ist mit einem nicht dargestellten Lenkstock verbunden, so dass sie den Drehbewegungen des Lenkrades folgt. Auf der Innenseite des Unterteils eines Gehäuses 22 ist eine Leiterplatte 24 angeordnet, auf welcher in der radialen Entfernung der Codespuren 12 bis 18 nicht dargestellte Empfänger angeordnet sind und auf welcher außerdem ein Blendenelement 25 und ein Lichtleiter 26 angeordnet ist. Vom Lichtleiter 26 und von dem Blendenelement 25 verdeckt befindet sich außerdem ein Sendeelement in Form einer Infrarot-Leuchtdiode 28 auf der Leiterplatte 24.

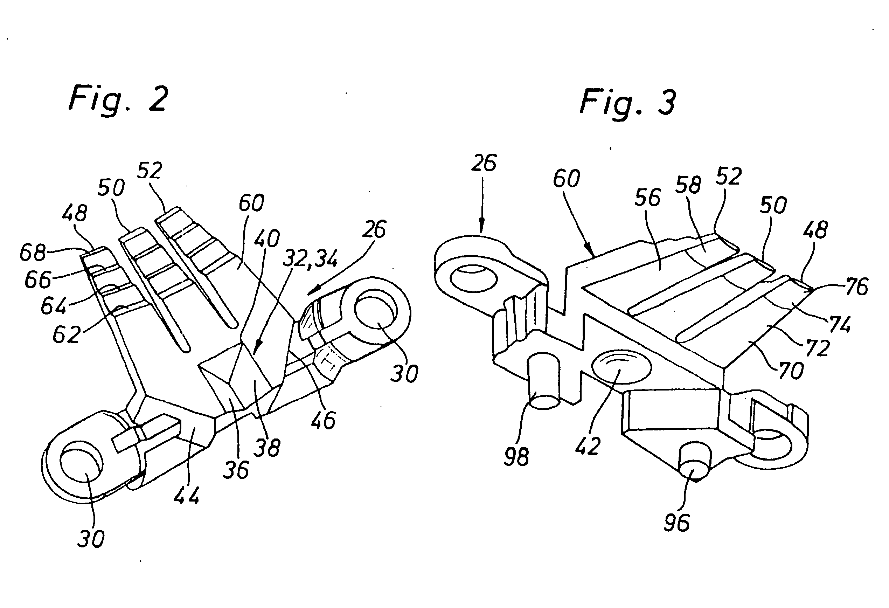

Die Fig. 2 zeigt eine Ansicht auf die Oberseite des Lichtleiters 26, und es sind deutlich die Befestigungsbohrungen 30 zu erkennen, über welche der Lichtleiter 26 am Gehäuse 22 fixiert wird. Außerdem ist ein als Ausnehmung 32 ausgebildetes Prisma 34 erkennbar, welches unmittelbar oberhalb der Infrarot-Leuchtdiode 28 sitzt. Das Prisma 34 besitzt drei Reflexionsflächen 36, 38 und 40, die bevorzugt verspiegelt sind. Das von der Infrarot-Leuchtdiode 28 abgestrahlte Licht trifft auf einen Lichteinkoppelabschnitt 42. Dieser Lichteinkoppelabschnitt 42 ist konvex ausgestaltet und einstückig an der Unterseite des Lichtleiters 26 angeformt. Außerdem befindet sich der Lichteinkoppelabschnitt 42 unmittelbar unterhalb des Prismas 34. Das in den Lichtleiter 26 über den Lichteinkoppelabschnitt 42 eingestrahlte Licht wird an den Reflexionsflächen 36 und 38 in Richtung auf zwei weitere Reflexionsflächen 44 und 46 gelenkt und von den Reflexionsflächen 44, 46 und 40 in Richtung von auf Finger 48, 50 und 52, die einstückig am Lichtleiter 26 angeformt sind und in radialer Richtung abragen, abgelenkt. Die Finger 48, 50 und 52 erstrecken sich, wie auch aus Fig. 1 ersichtlich, in radialer Richtung bezüglich der Codescheibe 10.

Die Unterseite 54 der Finger 48 bis 52 ist der Oberseite der Codescheibe 10 zugewandt und besitzt zwei Auskoppelabschnitte 56 und 58. Diese Auskoppelabschnitte 56 und 58 sind konvex gekrümmt, wobei der Auskoppelabschnitt 58 geringfügig hinter den Auskoppelabschnitt 56 zurückversetzt ist, so dass er einen größeren Abstand zur Codescheibe 10 aufweist.

Die Oberseite 60 der Finger 48 bis 52 weist insgesamt vier Reflexionsflächen 62, 64, 66 und 68 auf, die in radialer Richtung gesehen hintereinander angeordnet sind. Die Reflexionsflächen bilden einen von 90° verschiedenen Winkel zur Ebene der Codescheibe 10. Auch diese Reflexionsflächen 62 bis 68 und die Reflexionsflächen 44 und 46 sind verspiegelt. Die Reflexionsflächen 62 bis 68 haben den Zweck, dass ein Teil des in den Fingern 48 bis 52 geführten Lichts in Richtung der Auskoppelabschnitte 56 und 58, d.h. in Richtung auf die Codescheibe 10, umgelenkt wird. Dadurch werden in den beiden Auskoppelabschnitten 56 und 58 jeweils zwei Lichtauskoppelabschnitte 70, 72 und 74, 76 gebildet. Die Position dieser Lichtauskoppelabschnitte 70 bis 76 entspricht exakt den radialen Positionen der Codespuren 12 bis 18.

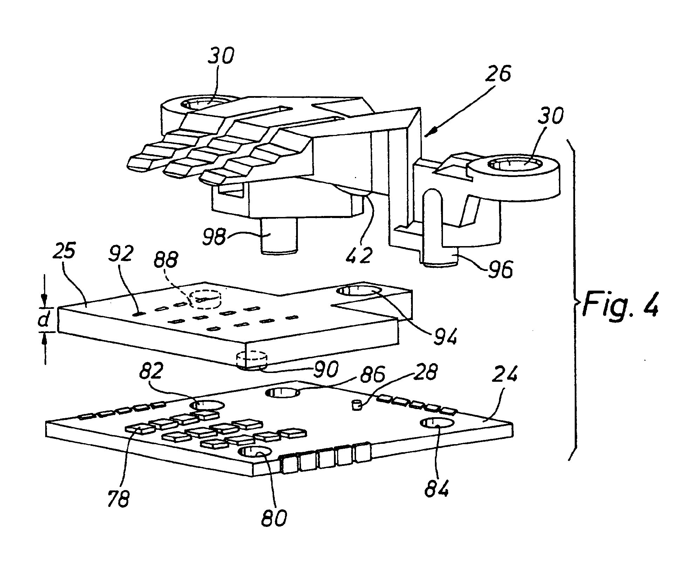

In der Fig. 4 ist die Leiterplatte 24, das Blendenelement 25 und der Lichtleiter 26 als Einzelteile in Expositionsdarstellung gezeigt. Auf der Leiterplatte 24 sind deutlich zwölf Empfängerelemente 78 zu erkennen, wobei jeweils drei Empfängerelemente jeweils eine der Codespuren 12, 14, 16 und 18 abtasten. Die Empfängerelemente 78 sind vorteilhafterweise als Fotosensoren ausgebildet. Auf der Leiterplatte 24 ist außerdem deutlich zu erkennen das Sendeelement in Form einer IR-Leuchtdiode 28. Die Leuchtdiode 28 und die Empfängerelemente 78 sind vorteilhafterweise in Chip-on-board-Technik ausgeführt. Dies hat den Vorteil, dass sehr geringe Positionstoleranzen zwischen den einzelnen Elementen 78 bzw. 28 möglich sind. Das Sendeelement 28 und die Empfängerelemente 78, sowie gegebenenfalls weitere elektronische Komponenten, wie beispielsweise Mikrochips zur Signalauswertung, Spannungsversorgung, Datenbus-Schnittstelle, Multithermerkennung und gegebenenfalls weitere Komponenten weiterer Funktionseinheiten, sind vorteilhafterweise im Reflow-Lötverfahren auf der Leiterplatte 24 aufgebracht.

Die Leiterplatte 24 weist insgesamt vier Positionieraussparungen 80, 82, 84 und 86 auf. Die Positionieraussparungen 80 und 82 sind zur Aufnahme von an der der Leiterplatte 24 zugewandten Seite des Blendenelements 25 angeordneten Positionierabschnitten 88 und 90 vorgesehen. Der einen kreisrunden Querschnitt aufweisende Positionierabschnitt 88 wird im montierten Zustand von der einen entsprechenden Querschnitt aufweisenden Positionieraussparung 80 aufgenommen. Entsprechend wird der Positionierabschnitt 90 von der Positionieraussparung 80 aufgenommen. Dadurch wird erreicht, dass das Blendenelement 25 positionsgenau auf der Leiterplatte 24 bzw. positionsgenau gegenüber den Empfängerelementen 78 und dem Sendeelement 28 angeordnet wird.

Das Blendenelement 25 weist im Bereich der Empfängerelemente 78 jeweils einen schlitzförmigen Durchbruch 92 auf. Insgesamt sind folglich zwölf Durchbrüche 92 vorhanden, die die von den Lichtauskopplungsabschnitten 70, 72, 74, 76 der Finger 48, 50 und 52 austretenden Strahlengänge abschirmen.

Entsprechend weist das Blendenelement 25 im Bereich des Sendeelements 28 einen Durchbruch 94 auf, der einen kreisrunden Querschnitt aufweist. Über den Durchbruch 94 können die von dem Sendeelement 28 ausgesandten Strahlen ungestört in den Lichteinkopplungsabschnitt 42 des Lichtleiters 26 gelangen.

Das Blendenelement 25 weist eine gewisse Dicke d auf, die 3- bis 5-mal dicker als die Codescheibe 10 ist, und ist aus einem lichtabsorbierenden Material. Dadurch wird verhindert, dass insbesondere in die Durchbrüche 92 schräg einfallendes Streulicht zu den Empfängerelementen 78 vordringen kann.

Die Positionieraussparungen 84 und 86 der Leiterplatte 24 sind zur Aufnahme von Positionierzapfen 96 und 98 des Lichtleiters 26 vorgesehen. Hierdurch wird der Lichtleiter positionsgenau zur Leiterplatte 24 und damit positionsgenau zu dem Sendeelement 28 und den Empfängerelementen 78 angeordnet.

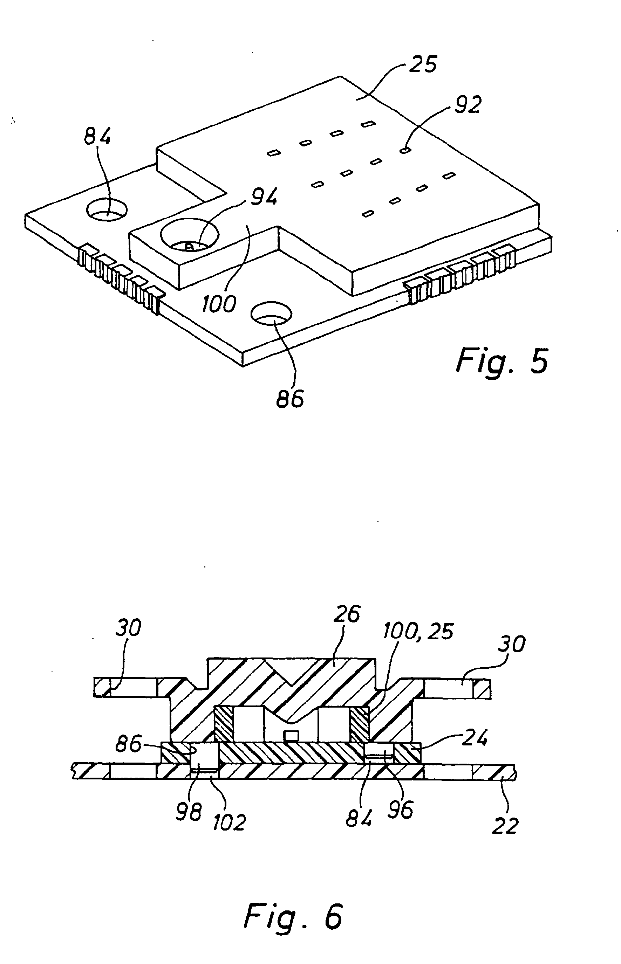

In der Fig. 5 ist die Leiterplatte 24 mit dem darauf angeordneten Blendenelement 25 dargestellt. Die Positionierabschnitte bzw. Positionierzapfen 88 und 90 sind hierbei in den jeweils zugehörigen Positionieraussparungen bzw. Bohrungen 80 und 82 angeordnet. Deutlich zu erkennen ist der den Durchbruch 94 aufweisenden Abschnitt 100 des Blendenelements. Dieser ragt zwischen die gedachte Linie der beiden Positionieraussparungen 84 und 86, die zur Aufnahme der beiden Positionierzapfen 96 und 98 des Lichtleiters 26 vorgesehen sind.

In der Fig. 6 ist ein senkrecht zu den Fingern 48, 50, 52 verlaufender Schnitt durch den Lichtleiter 26, den Abschnitt 100 des Blendenelements 25, die Leiterplatte 24 und einen Abschnitt des Gehäuseunterteils 22 dargestellt. Deutlich zu erkennen ist, dass der Positionierzapfen 96 des Lichtleiters 26 in die Aussparung 84 der Leiterplatte 24 eingreift. Der Positionierzapfen 98, der länger als der Positionierzapfen 96 ausgebildet ist, durchgreift die Aussparung 86 der Leiterplatte 24 und greift in eine Aussparung 102 am Gehäuseunterteil 22. Hierdurch wird eine positionsgenaue Anordnung des Lichtleiters 26 samt Blendenelement 25 und Leiterplatine 24 gegenüber dem Gehäuseunterteil 22, bzw. gegenüber dem gesamten Sensorgehäuse, möglich. Die einzelnen Bauteile 26, 25, 24 und 22 sind folglich zueinander positionsgenau ausgerichtet, wodurch geringe Positionstoleranzen erzielbar sind. Die Positionierung des Lichtleiters 26, des Blendenelements 25 und der Leiterplatte 24 gegenüber dem Gehäuse 22 ist von besonderer Bedeutung, da die Lagerung der Codescheibe 10 ebenfalls gegenüber dem Gehäuse 22 erfolgt.

Der Lichtleiter 26, und damit das Blendenelement 25 und die Leiterplatte 24, können über die Befestigungsbohrungen 30 des Lichtleiters 26 mittels bekannten Schrauben an dem Gehäuseunterteil 22 befestigt werden.

Fig. 1 kann im Übrigen entnommen werden, dass das Blendenelement 25 den Strahlengang bzw. die Strahlengänge zwischen der Codescheibe 10 und den Empfängerelementen 78 abschirmt, wobei die Codescheibe 10 einen zwischen dem Blendenelement 25 und den Lichtauskopplungsabschnitten 70, 72, 74 und 76 vorhandenen Spalt 104 weitgehend ausfüllt. Dadurch kann vorteilhafterweise kein Licht zwischen den Lichtauskopplungsabschnitten 70, 72, 74, 76 und dem Blendenelement 25 in die Durchbrüche 92 gelangen und das Messergebnis des Sensors nachteilig beeinflussen.

Die Erfindung ist nicht auf die Beschreibung und die Zeichnungen beschränkt und kann auch in anderer Weise innerhalb des Umfangs der nachfolgenden Ansprüche ausgeführt werden.

## Patentansprüche

1. Lenkwinkelsensor zur Bestimmung der Drehstellung eines Lenkrades eines Fahrzeuges, mit einer mit dem Lenkrad direkt oder indirekt verbundenen, eine optisch abtastbare Codierung (12) tragenden Codescheibe (10), mit wenigstens einem optische Strahlen aussendenden Sendeelement (28) und mehreren die Strahlen empfangenden Empfängerelementen (78), und mit einem Lichtleiter (26) zum Umlenken der von dem Sendeelement (28) abgestrahlten Strahlen, wobei der Lichtleiter (26) wenigstens einen Lichteinkopplungsabschnitt (42) und mehrere Lichtauskopplungsabschnitte (70, 72, 74, 76) aufweist, wobei das Sendeelement (28) und die Empfängerelemente (78) auf einer Sensorplatine (24) angeordnet sind, **dadurch gekennzeichnet, dass** auf der Sensorplatine (24) zwischen dem Sendeelement (28) und dem Lichteinkopplungsabschnitt (42) sowie zwischen den Lichzauskopplungsabschnitten (70, 72, 74, 76) und den Empfängerelementen (78) ein gemeinsames Blendenelement (25) angeordnet ist, das den Lichteinkopplungsabschnitt (42) und die Empfängerelemente (78) vor Streulicht schützt.

2. Sensor nach Anspruch 1, **dadurch gekennzeichnet, dass** das Blendenelement (25) im Bereich des Sendeelements (28) und im Bereich der Empfängerelemente (78) Durchbrüche (92, 94), insbesondere in Form von Schlitzen oder Kreiszylindern, aufweist.

3. Sensor nach Anspruch 1 oder 2, **dadurch gekennzeichnet, dass** das Blendenelement (25) plattenartig mit einer in Richtung der Strahlenkanäle gerichteten konstanten Dicke (d) ausgebildet ist.

4. Sensor nach Anspruch 1, 2 oder 3, **dadurch gekennzeichnet, dass** das Blendenelement (25) eine Dicke (d) aufweist, die 2- bis 8-mal und vorzugsweise 3- bis 5-mal dicker ist als die Dicke der Codescheibe (20).

5. Sensor nach wenigstens einem der vorhergehenden Ansprüche, **dadurch gekennzeichnet, dass** das Blendenelement (25) aus einem lichtabsorbierendnem Material ist.

6. Sensor nach einem der vorhergehenden Ansprüche, **dadurch gekennzeichnet, dass** das Blendenelement (25) den Strahlengang zwischen dem Sendelement (28) und dem Lichteinkopplungsabschnitt (42) vollständig abschirmt.

7. Sensor nach einem der vorhergehenden Ansprüche, **dadurch gekennzeichnet, dass** das Blendenelement (25) den Strahlengang bzw. die Strahlengänge zwischen der Codescheibe (10) und den Empfängerelementen (78) abschirmt, wobei die Codescheibe (10) einen zwischen dem Blendenelement (25) und den Lichtauskopplungsabschnitten (70, 72, 74, 76) vorhandenen Spalt weitgehend ausfüllt.

8. Sensor nach einem der vorhergehenden Ansprüche, **dadurch gekennzeichnet, dass** der Lichtleiter (26) über Befestigungsabschnitte (30) und/oder Positionierabschnitte (98) direkt mit dem Sensorgehäuse (22) gekoppelt ist.

9. Sensor nach Anspruch 8, **dadurch gekennzeichnet, dass** der Lichtleiter (26) direkt auf der Sensorplatine (24) aufliegt.

10. Sensor nach Anspruch 8 oder 9, **dadurch gekennzeichnet, dass** der Lichtleiter (26) wenigstens einen Positionierabschnitt (98) aufweist, der die Sensorplatine (24) durchgreift und in eine am Sensorgehäuse (22) vorgesehene Positionieraussparung (102) eingreift oder diese durchgreift.

11. Sensor nach einem der vorhergehenden Ansprüche, **dadurch gekennzeichnet, dass** das Blendenelement (25) wenigstens abschnittsweise zwischen dem Lichtleiter (26) und der Sensorplatine (24) angeordnet ist.

12. Sensor nach einem der vorhergehenden Ansprüche, **dadurch gekennzeichnet, dass** das Blendenelement (25) direkt mit der Sensorplatine (24) gekoppelt ist.

13. Sensor nach Anspruch 11, **dadurch gekennzeichnet, dass** die Sensorplatine (24) Positionieraussparungen (80, 82) bzw. Positionierabschnitte aufweist, die zur Aufnahme von an dem Blendenelement (25) vorgesehenen Positionierabschnitten (88, 90) bzw. Positionieraussparungen vorgesehen sind.

## Claims

1. A steering angle sensor for determining the rotational position of a steering wheel of a vehicle, comprising a code disk (10) that has an optically scannable coding (12) and that is directly or indirectly connected to the steering wheel, at least one transmitting element (28) that transmits optical beams and a plurality of receiver elements (78) that receive the beams, and a light guide (26) for diverting the beams that are emitted by the transmitting element (28), whereby the light guide (26) has at least one light input segment (42) and a plurality of light output segments (70,72,74,76), whereby the transmitting element (28) and the receiving elements (78) are arranged on a sensor board (24), wherein on the sensor board (24) a common aperture element (25) is arranged between the transmitting element (28) and the light input segment (42) as well as between the light output segments (70,72,74,76) and the receiver elements (78), said aperture element protecting the light input segment (42) and the receiver elements (78) from stray light.

2. The sensor as recited in Claim 1, wherein, in the area of the transmitting element (28) and in the area of the receiving elements (78), the aperture element (25) has openings (92,94), in particular in the form of slots or circular cylinders.

3. The sensor as recited in Claim 1 or 2, wherein the aperture element (25) is configured in board-like fashion having a constant thickness (d) in the direction of the beam channels.

4. The sensor as recited in Claim 1, 2, or 3, wherein the aperture element (25) has a thickness (d) that is 2 to 8 times and preferably 3 to 5 times thicker than the thickness of the code disk (20).

5. The sensor as recited in one or more of the preceding claims, wherein the aperture element (25) is made of a light-absorbant material.

6. The sensor as recited in any of the preceding claims, wherein the aperture element (25) completely shields the beam path between the transmitting element (28) and the light input segment (42).

7. The sensor as recited in any of the preceding claims, wherein the aperture element (25) shields the beam path, or beam paths, between the code disk (10) and the receiver elements (78), whereby the code disk (10) substantially fills a gap that exists between the aperture element (25) and the light input segments (70,72,74,76).

8. The sensor as recited in any of the preceding claims, wherein the light guide (26) is coupled directly to the sensor housing (22) via attachment segments (30) and/or positioning segments (98).

9. The sensor as recited in Claim 8, wherein the light guide (26) rests directly on the sensor board (24).

10. The sensor as recited in Claim 8 or 9, wherein the light guide (26) has at least one positioning segment (98), which penetrates the sensor board (24) and engages in, or penetrates, a positioning recess (102) that is provided on the sensor housing (22).

11. The sensor as recited in any of the preceding claims, wherein the aperture element (25) is at least partly arranged between the light guide (26) and the sensor board (24).

12. The sensor as recited in any of the preceding claims, wherein the aperture element (25) is directly coupled to the sensor board (24).

13. The sensor as recited in Claim 11, wherein the sensor board (24) has positioning recesses (80,82), or positioning segments, which are provided for receiving positioning segments (88,90), or positioning recesses, that are provided on the aperture element (25).

## Revendications

1. Capteur d'angle de braquage permettant de déterminer la position en rotation d'un volant d'un véhicule, comportant un disque de code (10) relié directement ou indirectement au volant, supportant un codage (12) pouvant être analysé par voie optique, au moins un élément émetteur (28) émettant des faisceaux optiques et plusieurs éléments récepteurs (78) recevant les faisceaux, et un guide d'onde optique (26) permettant de dévier les faisceaux diffusés par l'élément émetteur (28), moyennant quoi le guide d'onde optique (26) présente au moins une section de couplage de lumière (42) et plusieurs sections de découplage de lumière (70, 72, 74, 76), moyennant quoi l'élément émetteur (28) et les éléments récepteurs (78) sont disposés sur une platine pour capteur (24), **caractérisé en ce que**, sur la platine pour capteur (24), entre l'élément émetteur (28) et la section de couplage de lumière (42) et entre les sections de découplage de lumière (70, 72, 74, 76) et les éléments récepteurs (78) est disposé un élément d'écran (25) commun, qui protège la section de couplage de lumière (42) et les éléments récepteurs (78) de la lumière diffusée.

2. Capteur selon la revendication 1, **caractérisé en ce que** l'élément d'écran (25) présente, dans la zone de l'élément émetteur (28) et dans la zone des éléments récepteurs (78), des ajours (92, 94), en particulier sous la forme de fentes ou de cylindres circulaires.

3. Capteur selon la revendication 1 ou 2, **caractérisé en ce que** l'élément d'écran (25) est configuré sous la forme d'une plaque ayant une épaisseur (d) constante, orientée en direction des canaux à faisceaux.

4. Capteur selon l'une quelconque des revendications 1, 2 ou 3, **caractérisé en ce que** l'élément d'écran (25) présente une épaisseur (d), qui est de 2 à 8 fois et de préférence de 3 à 5 fois supérieure à l'épaisseur du disque de code (20).

5. Capteur selon au moins l'une quelconque des revendications précédentes, **caractérisé en ce que** l'élément d'écran (25) est constitué d'une matière absorbant la lumière.

6. Capteur selon l'une quelconque des revendications précédentes, **caractérisé en ce que** l'élément d'écran (25) blinde complètement la trajectoire des faisceaux entre l'élément émetteur (28) et la section de couplage de lumière (42).

7. Capteur selon l'une quelconque des revendications précédentes, **caractérisé en ce que** l'élément d'écran (25) blinde la trajectoire de faisceaux ou les trajectoires de faisceaux entre le disque de code (10) et les éléments récepteurs (78), moyennant quoi le disque de code (10) remplit largement une fente existant entre l'élément d'écran (25) et les sections de découplage de lumière (70, 72, 74, 76).

8. Capteur selon l'une quelconque des revendications précédentes, **caractérisé en ce que** le guide d'onde optique (26) est couplé par l'intermédiaire de sections de fixation (30) et/ou de sections de positionnement (98) directement avec le boîtier du capteur (22).

9. Capteur selon la revendication 8, **caractérisé en ce que** le guide d'onde optique (26) repose directement sur la platine pour capteur (24).

10. Capteur selon la revendication 8 ou 9, **caractérisé en ce que** le guide d'onde optique (26) présente au moins une section de positionnement (98), qui traverse la platine pour capteur (24), et pénètre dans un évidement de positionnement (102) prévu sur le boîtier de capteur (22), ou traverse celui-ci.

11. Capteur selon l'une quelconque des revendications précédentes, **caractérisé en ce que** l'élément d'écran (25) est disposé au moins par section entre le guide d'onde optique (26) et la platine pour capteur (24).

12. Capteur selon l'une quelconque des revendications précédentes, **caractérisé en ce que** l'élément d'écran (25) est couplé directement avec la platine pour capteur (24).

13. Capteur selon la revendication 11, **caractérisé en ce que** la platine pour capteur (24) présente des évidements de positionnement (80, 82) ou sections de positionnement, qui sont prévus afin de recevoir les sections de positionnement (88, 90) ou évidements de positionnement ménagés sur l'élément d'écran (25).
